# EUROPEAN PATENT SPECIFICATION

(11) **EP 0 473 071 B1**
(45) Date of publication and mention of the grant of the patent: **06.12.1995**
(21) Application number: 91114109.1
(22) Date of filing: 22.08.1991
(51) Int. Cl.: G02B 27/28, G02B 27/10

(54) **Beam combining apparatus for semiconductor lasers**
Vorrichtung zum Mischen von Licht aus Halbleiterlasern
Dispositif de combinaison du rayonnement de lasers de semi-conducteur

(30) Priority: 31.08.1990 JP 231355/90
(43) Date of publication of application: 04.03.1992
(73) Proprietor: SONY CORPORATION, Tokyo (JP)
(72) Inventor: Fujii, Yoshiaki, Shinagawa-ku Tokyo (JP); Sakurai, Michihiko, Shinagawa-ku Tokyo (JP); Ito, Yujiro, Shinagawa-ku Tokyo (JP)
(74) Representative: TER MEER STEINMEISTER & PARTNER GbR

(56) References cited:
- EP-A- 0 268 523
- PATENT ABSTRACTS OF JAPAN vol. 3, no. 98 (E-131) 18 August 1979 ; & JP-A-54 076 108
- PATENT ABSTRACTS OF JAPAN vol. 14, no. 179 (P-1034)(4122) 10 April 1990 ; & JP-A-2 029 713
- PATENT ABSTRACTS OF JAPAN vol. 10, no. 127 (P-455)(2184) 13 May 1986 ; & JP-A-60 253 033

## Description

### Background of the Invention

### 1. Field of the Invention

This invention relates to a wave combining apparatus for a semiconductor laser and can be applied advantageously to a wave combining apparatus for coupling a plurality of laser beams emitted from a plurality of semiconductor lasers to produce a single laser beam having a high light concentration.

### 2. Description of the Prior Art

As well known, a laser beam has been and is used widely in the field of medical treatment and also in the field of optical working (particularly for marking). However, in order for a laser beam to be used in such fields, it is necessary for the laser beam to have a significantly high light concentration. Accordingly, in order for a semiconductor laser having a low output power to be used in the field of medical treatment or in the field of optical working or the like, it is necessary to raise the light concentration of a semiconductor laser beam. Such demand may possibly be met with a wave combining apparatus which is constructed using an optical component such as a polarizing beam splitter prism or a dichroic mirror so as to couple a plurality of laser beams emitted from a plurality of semiconductor lasers.

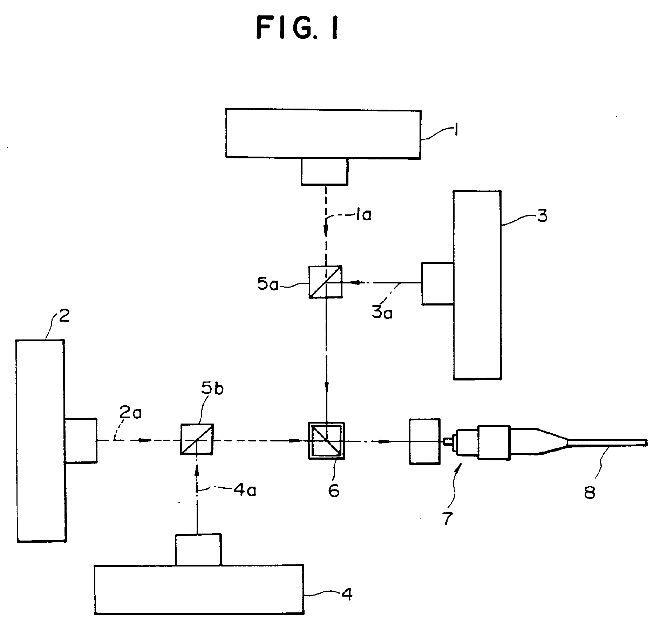

Fig. 1 is a diagrammatic view showing an exemplary one of conventional wave combining apparatus which are used to couple a plurality of light beams into a single light beam.

Referring to Fig. 1, the wave combining apparatus shown includes four semiconductor lasers 1 to 4. In this instance, the first and second semiconductor lasers 1 and 2 emit laser beams 1a and 2a of the P polarization, respectively. Meanwhile, the third and fourth semiconductor lasers 3 and 4 emit laser beams 3a and 4a of the S polarization, respectively. The laser beams 1a and 3a emitted from the first and third semiconductor lasers 1 and 3 have a wavelength of λ = 780 nm while the laser beams 2a and 4a emitted from the second and fourth semiconductor lasers 3 and 4 have another wavelength of λ = 830 nm.

As illustrated in Fig. 1, the first and third semiconductor lasers 1 and 3 are disposed such that they have optical axes which extend perpendicularly to each other on a same plane. Meanwhile, the second and fourth semiconductor lasers 2 and 4 are disposed such that the optical axes thereof may extend perpendicularly to each other on the same plane.

While the semiconductor lasers 1 to 4 are disposed in such arrangement as described just above, the laser beam 1a of the P polarization emitted from the first semiconductor laser 1 and the laser beam 3a of the S polarization emitted from the third semiconductor laser 3 are introduced into a first polarizing beam splitter prism 5a. Meanwhile, the laser beam 2a of the P polarization emitted from the second semiconductor laser 2 and the laser beam 4a of the S polarization emitted from the fourth semiconductor laser 4 are introduced into a second polarizing beam splitter prism 5b.

Each of the polarizing beam splitter prisms 5a and 5b is constructed such that a pair of 45-degree rectangular prisms each having applied to an inclined face thereof an alternate multi-layer film which consists of a plurality of alternate layers of a high refractive index and layers of a low refractive index are adhered to each other into a cubic body. Such polarizing beam splitter prisms 5a and 5b skillfully make use of such a phenomenon that, when certain conditions are satisfied, the reflectance of waves of the P polarization which oscillates in parallel to an incidence plane while the reflectance of waves of the S polarization increases as the number of alternate layers of the multi-layer film increases. Accordingly, the laser beams 1a to 4a can pass with a low loss through or be reflected by the polarizing beam splitter prisms 5a and 5b depending upon a difference in direction of oscillations so that they are combined with each other into two beams.

In this manner, the laser beams 1a, 3a and 2a, 4a coupled by the first and second polarizing beam splitter prisms 5a and 5b, respectively, are introduced into a dichroic mirror 6 at angles perpendicular to each other as seen in Fig. 1. The laser beams 1a, 3a and 2a, 4a then pass with a low loss through or are reflected in a perpendicular direction by the dichroic mirror 6 depending upon a difference in wavelength thereof so that they are combined with each other, and then, they are coupled to an optical fiber 8 by way of an optical coupler 7.

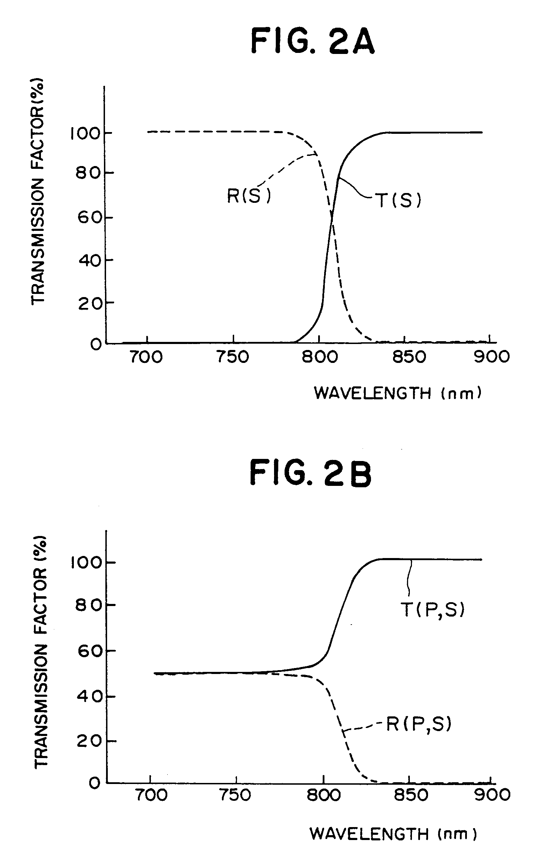

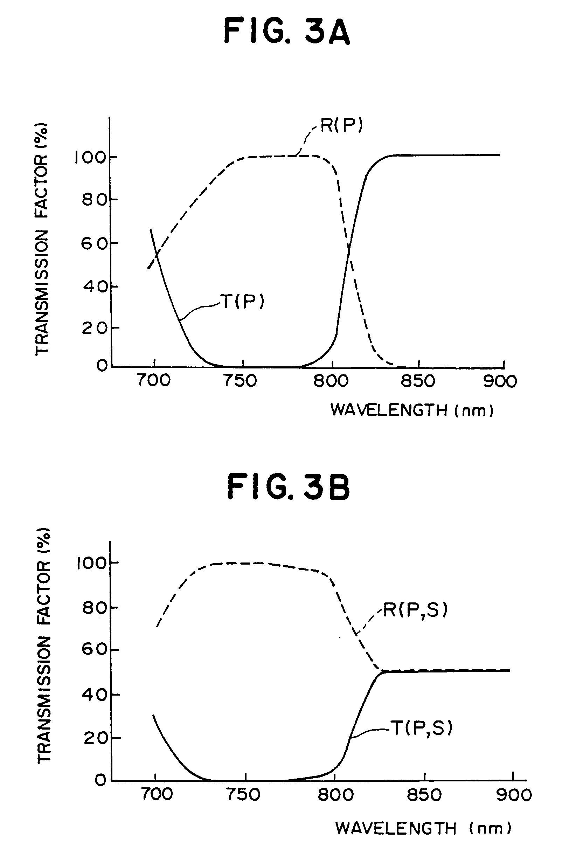

In the case of the wave combining apparatus shown in Fig. 1, since PS wave combination by the polarizing beam splitter prisms 5a and 5b takes place prior to wave combination by the dichroic mirror 6, the laser beams 1a, 3a and 2a, 4a introduced into the dichroic mirror 6 include a mixture of P polarization waves and S polarization waves. When P polarization waves and S polarization waves are mixed in this manner, it is difficult to improve the wave combining characteristic or efficiency of the wave combining apparatus. In particular, a dichroic mirror normally has such exemplary spectral characteristics as illustrated in Fig. 2A and 2B or 3A and 3B. In Figs. 2A, 2B and 3A, 3B, a characteristic curve R indicated by a broken line represents a reflection characteristic to a laser beam while a characteristic curve T indicated by a solid line represents a transmission characteristic.

In the case of the conventional wave combining apparatus described above, since P polarization waves and S polarization waves are introduced in a mixed condition into the dichroic mirror 6, even if a dichroic mirror having such spectral characteristics as illustrated in Figs. 2A and 2B is employed as such dichroic mirror 6, or else even if another dichroic mirror having such spectral characteristics as illustrated in Figs. 3A and 3B is employed, the wave combining efficiency is very low.

In particular, where a dichroic mirror having such spectral characteristics as illustrated in Figs. 2A and 2B is employed, the transmission factor η_{830̸} of the dichroic mirror at the wavelength of 830 nm is high at η_{830̸} = 0.97, but the reflectance η_{780̸} at the wavelength of 780 nm is significantly low at η_{780̸} = 0.5.

On the other hand, where a dichroic mirror having such spectral characteristics as illustrated in Figs. 3A and 3B is employed, the reflectance η_{780̸} of the dichroic mirror at the wavelength of 780 nm is high at η_{780̸} = 0.97, but the transmission factor η_{830̸} at the wavelength of 830 nm is low at η_{830̸} = 0.5.

Since both of the transmission efficiency and the reflection efficiency cannot be made high with a conventional wave combining apparatus in this manner, the total wave combining efficiency η of the wave combining apparatus is η = 0.48 or so and cannot exceed 50 percent.

JP-A-54-076 108 teaches to provide a wave combining apparatus for a semiconductor laser by which a plurality of laser beams are converged into a single beam to be coupled to an optical fiber by constituting the wave combining apparatus such that wave combination making use of wavelength division by dichroic mirrors is performed first and then wave combination making use of a difference in direction of oscillations by a polarizing beam splitter prism is performed.

### Objects and Summary of the Invention

It is a first object of the present invention to provide, in consideration of such problems of the prior art as described above, a wave combining apparatus according to claim 1 for a semiconductor laser by which a high total wave combining efficiency η in combining laser beams can be assured.

It is a second object of the present invention to provide a wave combining apparatus for a semiconductor laser by which a high wave coupling efficiency is assured by constituting the wave combining apparatus such that an optical component such as a cylindrical lens is interposed between each of dichroic mirrors and a polarizing beam splitter prism so as to produce a laser beam having a desired shape.

### Brief Description of the Drawing

Fig. 1 is a diagrammatic view showing a conventional wave combining apparatus;
Figs. 2A and 2B are graphs illustrating an exemplary spectral characteristic of a dichroic mirror of such wave combining apparatus as shown in Fig. 1;
Figs. 3A and 3B are are graph illustrating an alternative exemplary spectral characteristic of the dichroic mirror of such wave combining apparatus as shown in Fig. 1;
Fig. 4 is a diagrammatic view of a wave combining apparatus for a semiconductor laser showing another prior art apparatus.
Fig. 5 is a graph illustrating a spectral characteristic of a polarizing beam splitter prism employed in the wave combining apparatus of Fig. 4;
Fig. 6 is a diagrammatic view illustrating radiation of a laser beam used in the wave combining apparatus shown in Fig. 4;
Fig. 7 is a diagrammatic view illustrating coupling of a laser beam used in the wave combining apparatus shown in Fig. 4;
Fig. 8 is a diagrammatic view illustrating shaping of a laser beam in a horizontal direction;
Fig. 9 is a similar view but illustrating shaping of a laser beam in a vertical direction; and
Fig. 10 is a diagrammatic view of another wave combining apparatus for a semi conductor laser showing another embodiment of the present invention.

### Detailed Description of the Preferred Embodiments

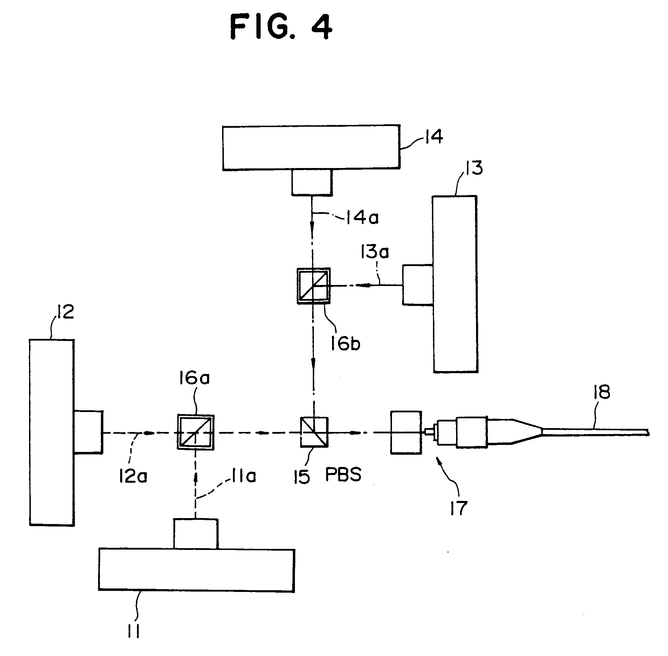

Referring first to Fig. 4, there is shown a wave combining apparatus based on the same principles as the apparatus disclosed in JP-A-54 076 108. The wave combining apparatus shown includes four semiconductor lasers 11 to 14 from which laser beams 11a to 14a to be combined into a single beam are emitted, respectively. In the wave combining apparatus of the present embodiment, however, wave combination making use of a difference in wavelength is first performed by a pair of dichroic mirrors 16a and 16b and then wave combination making use of a difference in direction of oscillations is performed by a polarizing beam splitter prism 15, as different the conventional wave combining apparatus described hereinabove.

In particular, in the wave combining apparatus of the present embodiment, the first and second semiconductor lasers 11 and 12 which output a laser beam of the P polarization are disposed in pair with each other while the third and fourth semiconductor lasers 13 and 14 which output a laser beam of the S polarization are disposed in pair with each other. Laser beams 11a and 12a are emitted from the first and second semiconductor lasers 11 and 12, respectively, and introduced into the first dichroic mirror 16a while laser beams 13a and 14a are emitted from the third and fourth semiconductor lasers 13 and 14, respectively, and introduced into the second dichroic mirror 16b. Conditions in which such laser beams 11a to 14a are introduced into the dichroic mirrors 16a and 16b are similar to those of the conventional wave combining apparatus described hereinabove with reference to Fig. 1. Thus, the semiconductor lasers 11 to 14 are disposed such that the laser beams 11a to 14a emitted therefrom, respectively, are introduced in directions perpendicular to each other on a same plane. It is to be noted that the laser beams 11a to 14a emitted from the semiconductor lasers 11 to 14 have similar wavelengths to those of laser beams emitted from the semiconductor lasers 1 to 4 of the conventional wave combining apparatus described hereinabove with reference to Fig. 1. Thus, the first and third semiconductor lasers 11 and 13 emit a laser beam of a wavelength of 780 nm while the second and fourth semiconductor lasers 12 and 14 emit a laser beam of another wavelength of 830 nm.

Since the semiconductor lasers are disposed in the present embodiment such that those of them which emit laser beams having the same direction of oscillations and having different wavelengths are paired with each other, wave combination by wavelength division using the dichroic mirrors 16a and 16b can be performed formerly. Consequently, a dichroic mirror having such transmission and reflection characteristics as illustrated in Figs. 3A and 3B can be employed as the first dichroic mirror 16a for combining the laser beam 11a emitted from the first semiconductor laser 11 and the laser beam 12a emitted from the second semiconductor laser 12 while another dichroic mirror having such transmission and reflection characteristics as illustrated in Figs. 2A and 2B can be employed as the second dichroic mirror 16b for combining the laser beam 13a emitted from the third semiconductor laser 13 and the laser beam 14a emitted from the fourth semiconductor laser 14. Accordingly, a high reflectance and a high transmission factor can be obtained at both of the wavelengths of 780 nm and 830 nm as seen from Figs. 2a and 3b. Consequently, a significantly improved wave combining efficiency by wavelength division can be achieved.

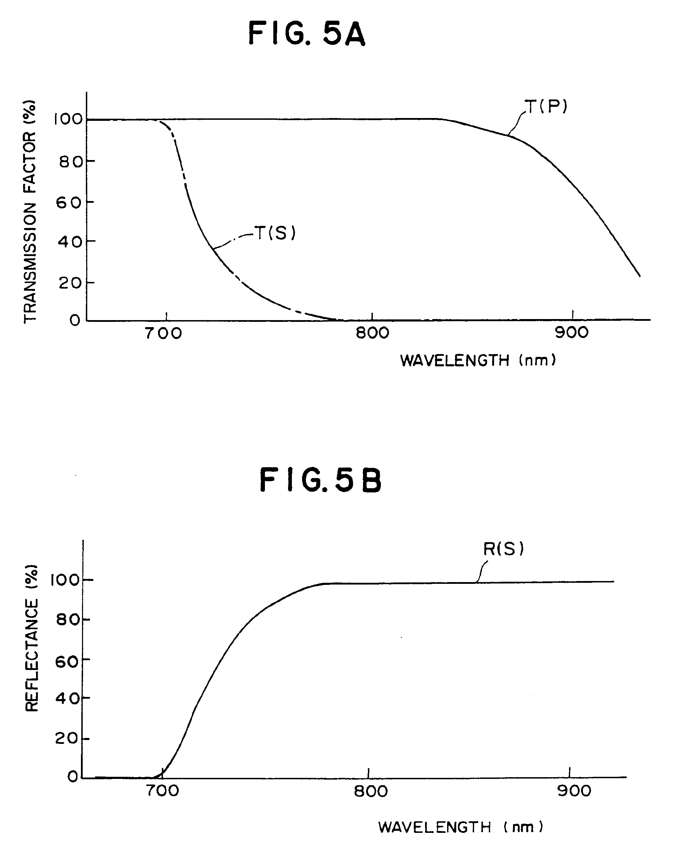

After the four laser beams 11a to 14a emitted from the four semiconductor lasers 11 to 14 are combined into two beams, the two beams are introduced into the polarizing beam splitter prism 15, at which they are combined into a single beam. In this instance, waves of the two lengths of 780 nm and 830 nm are introduced in a mixed condition into the polarizing beam splitter prism 15. However, since a polarizing beam splitter prism is available which has good reflection and transmission characteristics over a wide range from 780 to 830 nm as seen from a spectral characteristic diagram of Fig. 5, where such polarizing beam splitter prism is employed as the polarizing beam splitter prism 15 shown in Fig. 4, such high reflection and transmission characteristics can be achieved that the reflection characteristic η_{S} is η_{S} = 0.97 and the transmission characteristic η_{T} is η_{T} = 0.97. Consequently, the wave combining apparatus for a semiconductor laser of the embodiment shown in Fig. 4 can have a high average total efficiency η of up to 63.5 percent.

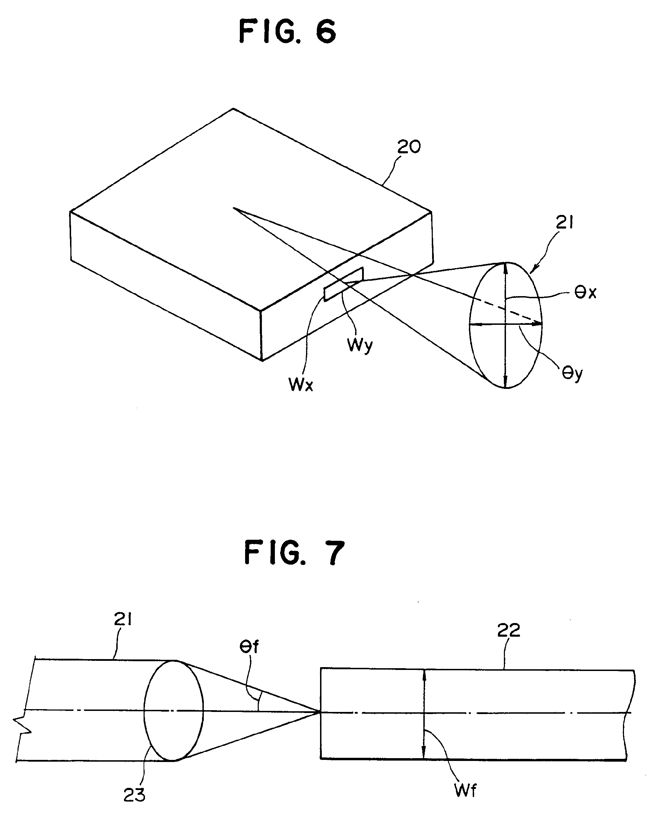

The present wave combining apparatus for a semiconductor laser having a further improved average total efficiency η will be described subsequently with reference to Figs. 6 to 10 which show a second preferred embodiment of the present invention.

Referring first to Fig. 6, while a laser beam 21 is emitted from a light source of a very small semiconductor laser 20, strictly the light source is not a point light source. For example, if a vertical length of the light source is represented by Wₓₘₐₓ and a horizontal length is represented by W_{ymax}, then the vertical length and horizontal length of the light source of the semiconductor laser 20 may be Wₓₘₐₓ = 1 »m and W_{ymax} = 600 »m or so, respectively.

While the laser beam 21 emitted from such small light source spreads in a vertical direction, it will not spread very much in a horizontal direction. In other words, the spreading angle ϑₓ of the beam in a vertical direction is comparatively great while the spreading angle ϑ_{y} of the beam in a horizontal direction is comparatively small.

In order for the laser beam 21 having such sectional shape to be coupled in a high efficiency to an optical fiber 22 as shown in Fig. 7, two constants m_{y} and mₓ must necessarily be determined such that they may satisfy the following two expressions:${\text{m}}_{\text{y}} {\text{· W}}_{\text{ymax}} \text{≦ Wf}$${\text{1/m}}_{\text{x}} {\text{· sinϑ}}_{\text{x}} \text{/2 ≦ NA}$
where Wf is a diameter of the optical fiber 22, and NA is a numerical aperture (sinϑf in Fig. 7).

In the case of a certain semiconductor laser which outputs a laser beam of 3 W, the vertical length and horizontal length are Wₓₘₐₓ = 1 »m and W_{ymax} = 600 »m or so, respectively, as described hereinabove. Meanwhile, since ϑₓ = 43 degrees and ϑ_{y} = 15 degrees, the constants m_{y} and mₓ must necessarily be designed in different magnification systems in order to satisfy the expressions (1) and (2) above.

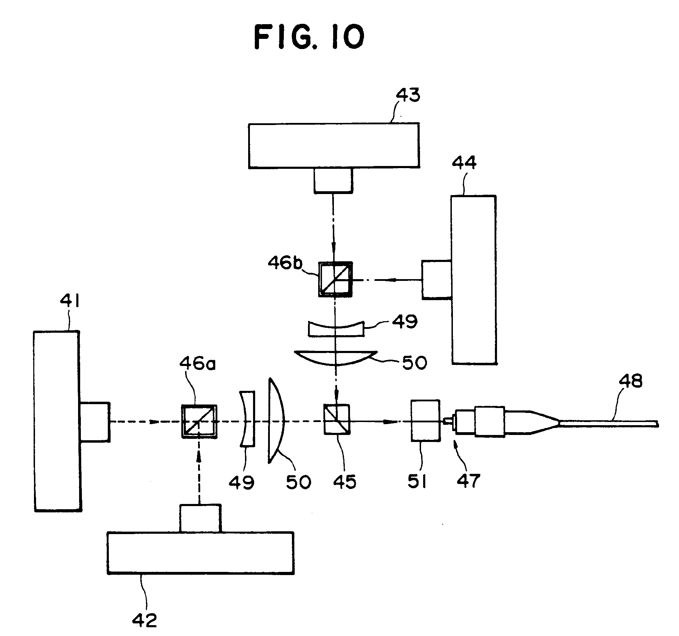

In the wave combining apparatus of the second embodiment, in order to satisfy such requirements, first and second cylindrical lenses 49 and 50 are interposed between a polarizing beam splitter prism 45 and each of a pair of dichroic mirrors 46a and 46b as shown in Fig. 10 so that different magnifications may be set for vertical and horizontal directions.

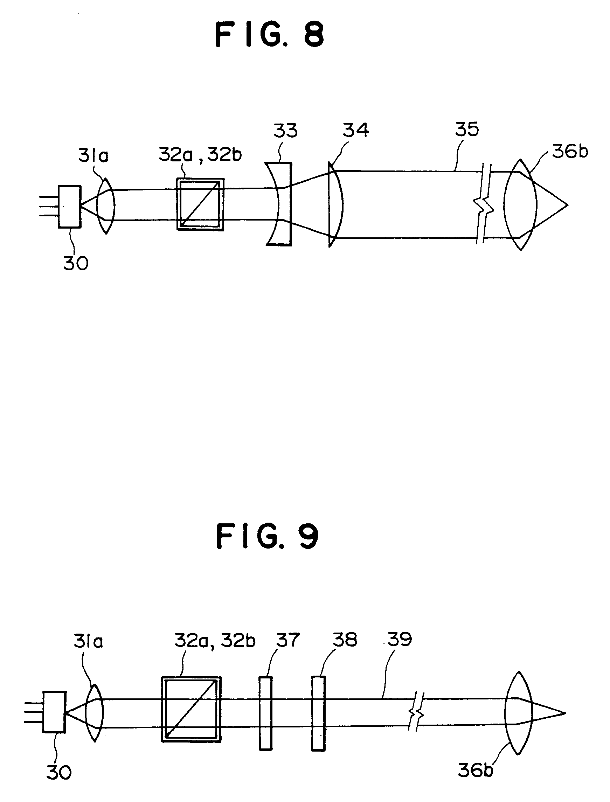

A concave lens may be employed for the first cylindrical lenses 49 while a convex lens may be employed for the second cylindrical lenses 50. An optical system including a concave lens and a convex lens in combination is generally called beam expander and expands a laser beam with a magnification which depends upon focal lengths of the lenses 49 and 50. It is to be noted that, since cylindrical lenses are employed in the present embodiment, only the diameter of a beam in a horizontal direction is decreased while the dimension of the beam in a vertical direction is maintained as seen from Figs. 8 and 9. A semiconductor laser has a comparatively great dimension in a horizontal direction and a comparatively small dimension in a vertical direction as described hereinabove with reference to Fig. 1. Accordingly, if only the dimension of the laser beam 21 in a horizontal direction is reduced as described above, then when the laser beam 21 is to be converged by a coupling lens 36b disposed forwardly of the optical fiber 22 and then introduced into the optical fiber 22, it can be introduced uniformly to an effective input face of the optical fiber 22. In particular. referring to Fig. 8, where the focal length of a lens 31a disposed forwardly of a semiconductor laser 30 is represented by f₁, the focal length of a second cylindrical lens 33 is represented by f₂, the focal length of a second cylindrical lens 34 is represented by f₃, and the focal length of the coupling lens 36b disposed forwardly of an optical fiber is represented by f₄, then a constant m may be given by$\text{m =} \frac{\text{f₂}}{\text{f₁}} \text{x} \frac{\text{f₄}}{\text{f₃}}$
Thus, the constant m can be set, for example, to 0.5. With the wave combining apparatus of the present embodiment, such shaping of a beam has resulted in improvement in coupling efficiency to the optical fiber 22, which was about 75 percent with the wave combining apparatus of the preceding first embodiment, to up to about 85 percent. Consequently, with the wave combining apparatus of the second embodiment, the average total efficiency was able to be raised to about 70 percent and thus be improved by about 6.5 percent with respect to that of the wave combining apparatus of the first embodiment.

If such wave combining apparatus for a semiconductor laser of the first or second embodiment as described above is employed, then laser beams emitted from semiconductor lasers can be improved significantly in light concentration, and accordingly, semiconductor lasers can be utilized effectively in the field of medical treatment or in the field of optical working such as marking.

It is to be noted that, while, in each of the first and second embodiments described above, four laser beams emitted from four semiconductor lasers are converged into a single beam, a wave combining apparatus for a semiconductor apparatus of the present invention can be applied also to a case wherein three laser beams emitted from three semiconductor lasers are to be converged into a single beam.

It is also to be noted that, while shaping of a beam is performed in the embodiments described above such that a greater one of perpendicular dimensions of the beam is decreased, such shaping may be performed otherwise such that a smaller one of perpendicular dimensions of the beam is increased.

As described so far, according to the present invention, since a wave combining apparatus is constituted such that, in performing wave combination to converge a plurality of laser beams into a single laser beam using a polarizing beam splitter prism and a dichroic mirror, wave combination making use of waveform division by a pair of dichroic mirrors is performed formerly and then PS wave combination by a polarizing beam splitter prism is performed to converge the laser beams into a single laser beam, laser beams which are oscillated in a same direction can be introduced into the dichroic mirrors. Consequently, a dichroic mirror for P waves and another dichroic mirror for S waves can be selectively used for the dichroic mirrors in accordance with directions of oscillations of laser beams to be combined, and accordingly, for example, both of improvement in reflectance for small wavelengths and improvement in transmission factor for great wavelengths are made possible and the wave combining efficiency of the dichroic mirrors can be improved significantly. Consequently, the total coupling efficiency when a plurality of laser beams are converged into a signal laser beam to be coupled to an optical fiber can be improved.

Further, since a pair of cylindrical lenses are interposed between the polarizing beam splitter prism and the dichroic mirrors so that laser beams may be shaped by the cylindrical lenses, the efficiency when the beam is to be coupled to the optical fiber can be improved significantly and the total coupling efficiency can be further improved.

## Claims

1. A beam combining apparatus for combining a plurality of input laser beams into a single beam, comprising
a first dichroic mirror (16a) for receiving a pair of input laser beams (11a, 12a), which are polarized in a first plane and for combining the pair of input laser beams into a single beam, a second dichroic mirror (16b) for receiving an other pair of input laser beams (13a, 14a), which are polarized in a second plane perpendicular to the first plane and for combining the other pair of input laser beams into a single beam, said first and second dichroic mirrors being positioned such that the light beams emanating therefrom are orientated orthogonally with respect to each other,
and a polarizing beam splitter prism (15) disposed to receive said beams emanating from said first and second dichroic mirrors and to combine the thus received beams into a single beam,
**characterized by**
an optical component interposed between each of said first and second dichroic mirrors (16a, 16b) and said polarizing beam splitter prism (15) for shaping said beams from said first and second dichroic mirrors.

2. A beam combining apparatus according to claim 1, wherein said optical component is a cylindrical lens.

3. A beam combining apparatus according to claim 1, wherein said optical component is a beam expander including a concave lens and a convex lens each in the form of a cylindrical lens.

4. A beam combining apparatus according to claim 1, further comprising a pair of first semiconductor lasers for emitting laser beams polarized in the first plane to be received by said first dichroic mirror, and a pair of second semiconductor lasers for emitting laser beams polarized in the second plane to be received by said second dichroic mirror.

5. A beam combining apparatus according to claim 1, further comprising a pair of first semiconductor lasers for emitting laser beams polarized in the first plane and to be received by said first dichroic mirror, and a second semiconductor laser for emitting a laser beam to be received by said second dichroic mirror, said second dichroic mirror coupling the thus received laser beam as it is to said polarizing beam splitter prism.

## Patentansprüche

1. Strahlmischvorrichtung zum Mischen mehrerer Eingangslaserstrahlen zu einem einzelnen Strahl, mit
- einem ersten dichroitischen Spiegel (16a) zum Empfangen eines Paars von Eingangslaserstrahlen (11a, 12a), die in einer ersten Ebene polarisiert sind, und zum Mischen des Paars Eingangslaserstrahlen zu einem einzelnen Strahl;
- einem zweiten dichroitischen Spiegel (16b) zum Empfangen eines anderen Paars Eingangslaserstrahlen (13a, 14a), die in einer zweiten Ebene rechtwinklig zur ersten Ebene polarisiert sind, und zum Mischen des anderen Paars Eingangslaserstrahlen zu einem einzelnen Strahl;
- wobei der erste und der zweite dichroitische Spiegel so angeordnet sind, daß die aus ihnen austretenden Lichtstrahlen rechtwinklig zueinander ausgerichtet sind; und
- einem polarisierenden Strahlteilerprisma (15), das so angeordnet ist, daß es die aus dem ersten und zweiten dichroitischen Spiegel austretenden Strahlen empfängt, und das dazu dient, die so empfangenen Strahlen zu einem einzelnen Strahl zu mischen;
**gekennzeichnet durch**
- eine optische Komponente, die zwischen jeden des ersten und zweiten dichroitischen Spiegels (16a, 16b) und das polarisierende Strahlteilerprisma (15) eingefügt ist, um die Strahlen aus dem ersten und zweiten dichroitischen Spiegel zu formen.

2. Strahlmischvorrichtung nach Anspruch 1, bei der die optische Komponente eine Zylinderlinse ist.

3. Strahlmischvorrichtung nach Anspruch 1, bei der die optische Komponente ein Strahlaufweiter mit einer Konkavlinse und einer Konvexlinse ist, die jeweils die Form einer Zylinderlinse haben.

4. Strahlmischvorrichtung nach Anspruch 1, ferner mit einem Paar erster Halbleiterlaser zum Emittieren von in der ersten Ebene polarisierten Laserstrahlen, die vom ersten dichroitischen Spiegel zu empfangen sind, und einem Paar zweiter Halbleiterlaser zum Emittieren von in der zweiten Ebene polarisierten Laserstrahlen, die vom zweiten dichroitischen Spiegel zu empfangen sind.

5. Strahlmischvorrichtung nach Anspruch 1, ferner mit einem Paar erster Halbleiterlaser zum Emittieren von in der ersten Ebene polarisierten Laserstrahlen, die vom ersten dichroitischen Spiegel zu empfangen sind, und einem zweiten Halbleiterlaser zum Emittieren eines vom zweiten dichroitischen Spiegel zu empfangenden Laserstrahls, wobei der zweite dichroitische Spiegel den so empfangenen Laserstrahl als solchen in das polarisierende Strahlteilerprisma einkoppelt.

## Revendications

1. Appareil de combinaison de faisceaux, destiné à combiner plusieurs faisceaux lasers d'entrée en un seul faisceau, comprenant un premier miroir dichroïque (16a) destiné à recevoir deux faisceaux lasers d'entrée (11a, 12a) qui sont polarisés dans un premier plan et à combiner la paire de faisceaux lasers d'entrée en un seul faisceau, un second miroir dichroïque (16b) destiné à recevoir une autre paire de faisceaux lasers d'entrée (13a, 14a) qui sont polarisés dans un second plan perpendiculaire au premier et à combiner l'autre paire de faisceaux lasers d'entrée en un seul faisceau, le premier et le second miroir dichroïque étant disposés afin que les faisceaux lumineux qui en proviennent soient orientés perpendiculairement l'un à l'autre, et un prisme polarisant séparateur de faisceau (15) disposé afin qu'il reçoive les faisceaux provenant du premier et du second miroir dichroïque et combine les faisceaux reçus en un seul faisceau,
caractérisé par un composant optique placé entre chacun des premier et second miroirs dichroïques (16a, 16b) et le prisme polarisant séparateur de faisceau (15) et assurant la conformation des faisceaux provenant du premier et du second miroir dichroïque.

2. Appareil de combinaison de faisceaux selon la revendication 1, dans lequel le composant optique est une lentille cylindrique.

3. Appareil de combinaison de faisceaux selon la revendication 1, dans lequel le composant optique est un expanseur de faisceau comprenant une lentille concave et une lentille convexe, chacune sous forme d'une lentille cylindrique.

4. Appareil de combinaison de faisceaux selon la revendication 1, comprenant en outre une paire de lasers à semi-conducteur destinés à émettre des faisceaux lasers polarisés dans le premier plan afin qu'ils soient reçus par le premier miroir dichroïque, et une paire de seconds lasers à semi-conducteur destinés à émettre des faisceaux lasers polarisés dans le second plan afin qu'ils soient reçus par le second miroir dichroïque.

5. Appareil de combinaison de faisceaux selon la revendication 1, comprenant en outre deux premiers lasers à semi-conducteur destinés à émettre des faisceaux lasers polarisés dans le premier plan et à être reçus par le premier miroir dichroïque, et un second laser à semiconducteur destiné à émettre un faisceau laser destiné à être reçu par le second miroir dichroïque, le second miroir dichroïque couplant le faisceau laser ainsi reçu tel quel au prisme polarisant répartiteur de faisceau.
